# NOUVEAU FASCICULE DE BREVET EUROPEEN

(11) **EP 0 623 502 B2**
(45) Date de publication et mention de la décision concernant l'opposition: **05.12.2001**
(45) Mention de la délivrance du brevet: 12.11.1997
(21) Numéro de dépôt: 94400658.4
(22) Date de dépôt: 28.03.1994
(51) Int. Cl.: B62D 33/02, B60P 1/26

(54) **Système de commande d'une ridelle de benne de véhicule articulée par le bas**
Steuersystem für eine an ihrer Unterseite beweglich befestigte Fahrzeuglade-Bordwand
Control system for the tailboard or sideboard of a lorry, articulated at the lower side

(30) Priorité: 03.05.1993 FR 9305242
(43) Date de publication de la demande: 09.11.1994
(73) Titulaire: MARREL, F-42160 Andrézieux-Bouthéon (FR)
(72) Inventeur: Heritier, Albert, F-42340 Veauche (FR); Grail, Joseph, F-42100 Saint Etienne (FR)
(74) Mandataire: Santarelli, Marc

(56) Documents cités:
- DE-A- 2 417 882
- GB-A- 2 110 753
- PATENT ABSTRACTS OF JAPAN vol. 10, no. 6 (M-445) (2063) 11 Janvier 1986 & JP-A-60 169 373 (FUSOU JIDOUSHIYA) 2 Septembre 1985
- Prospekt "Meiller stellt aus" für die IAA Nutzfahrzeuge 9.-17. Mai 1992 bzw. BAUMA München, 6.-12. April 1992
- Katalog "Ersatzteillisten Bordmatik für Meiller-Kipper mit liegender Pressenanordnung", Ausgabe September 1987, Nr. 0000 0612 050

## Description

L'invention a trait aux ridelles de bennes de véhicules qui sont articulées par le bas.

On sait que les ridelles sont des portes qui forment une partie de la paroi verticale de la benne quand elles sont fermées et qu'on ouvre pour faciliter le chargement ou le déchargement de la benne, celle-ci pouvant être fixe ou basculante. Les ridelles articulées par le bas sont particulièrement appréciées parce qu'une fois ouvertes, elles ne laissent subsister au dessus du fond de la benne aucun obstacle gênant le chargement ou le déchargement.

On connaît déjà par DE-A-24 17 882 un système de commande d'une telle ridelle, qui comporte :
- un ensemble de contrôle du mouvement de la ridelle, comportant un vérin lié à la ridelle et au reste de la benne, ce vérin étant à double effet ;
- une valve de commande de vérin double effet, pour commander le vérin de ridelle, reliée aux deux chambres de commande du vérin de ridelle, à une pompe et à un réservoir, admettant une position d'ouverture de la ridelle où l'une des chambres de commande du vérin de verrouillage est reliée à la pompe tandis que l'autre chambre est reliée au réservoir, et admettant une position de fermeture de la ridelle où les liaisons sont inversées ;
- un ensemble de verrouillage de la ridelle, comportant un loquet sollicité par un ressort spiral vers une position de verrouillage où il peut retenir un doigt solidaire de la ridelle lorsque celle-ci est en position fermée, cet ensemble comportant un vérin lié au loquet et au reste de la benne ;
- une valve de commande de vérin simple effet, pour commander le vérin de loquet, reliée à la chambre de commande du vérin de loquet, à une pompe et à un réservoir, admettant une position de déverrouillage de la ridelle où la chambre de commande du vérin de loquet est reliée à la pompe, et une position de verrouillage où cette chambre de commande est reliée au réservoir, ainsi qu'une position de blocage du fluide présent dans la chambre de commande ; et
- un dispositif de sécurité comportant une valve de court-circuit disposée entre les conduites reliant le vérin de ridelle à sa valve de commande, la valve de sécurité étant commandée par le loquet de verrouillage de sorte que l'actionnement du vérin de ridelle n'est possible que quand le loquet est en position de déverrouillage.

On connaît également, dans un dispositif appelé MEILLER-BORDMATIK,un système de commande d'une ridelle de benne de véhicule articulée par le bas, comportant :
- un ensemble de contrôle du mouvement de la ridelle, comportant un vérin dit de ridelle, lié à celle-ci et au reste de la benne, à simple effet, présentant une chambre de commande qui diminue de volume quand la ridelle s'abaisse (s'ouvre) tandis qu'il est adapté par introduction de fluide sous pression dans ladite chambre de commande, à entraîner la ridelle à se relever jusqu'à être en position fermée ;
- un ensemble de verrouillage de la ridelle, comportant un loquet sollicité par un moyen élastique vers une position de verrouillage où il peut retenir un doigt solidaire de la ridelle lorsque celle-ci est en position fermée, ledit loquet et ledit doigt étant prévus pour coopérer de sorte qu'en fin de fermeture de la ridelle, si le loquet est en position de verrouillage, le doigt vient rencontrer le loquet et l'entraîne à l'encontre du moyen élastique jusqu'à une position limite où le loquet peut revenir vers la position de verrouillage en accrochant alors le doigt ; et comportant un vérin dit de verrouillage, lié au loquet et au reste de la benne, et présentant une chambre de commande qui diminue de volume quand le loquet va vers la position de verrouillage, étant prévu, par introduction de fluide sous pression dans ladite chambre de commande, pour entraîner le loquet à s'éloigner de la position de verrouillage jusqu'à une position où il ne retient plus ledit doigt, afin de permettre à la ridelle de s'ouvrir ; et
- une valve de commande de fluide, reliée à la chambre de commande du vérin de ridelle, à la chambre de commande du vérin de verrouillage, à une pompe et à un réservoir, admettant une position d'ouverture de la ridelle où la chambre de commande du vérin de verrouillage est reliée à la pompe tandis que la chambre de commande du vérin de ridelle est reliée au réservoir, et admettant une position de fermeture de la ridelle où la chambre de commande du vérin de ridelle est reliée à la pompe tandis que la chambre de commande du vérin de verrouillage est reliée au réservoir, et admettant une position de fermeture de la ridelle où la chambre de commande du vérin de ridelle est reliée à la pompe tandis que la chambre de commande du vérin de verrouillage est reliée au réservoir.

Ce système prévoît donc que tant le vérin de ridelle que le vérin de verrouillage sont sollicités par une force autre qu'hydraulique dans l'un des sens, ces forces étant procurées respectivement par le poids de la ridelle, qui l'entraîne à s'ouvrir puisqu'elle est articulée par le bas, et par le moyen élastique qui entraîne le loquet vers la position de verrouillage.

Avec de telles forces, il est à tout moment possible de commander l'ouverture ou la fermeture de la ridelle en n'ayant besoin de vaincre que l'une d'entre elles : pour ouvrir la ridelle, seul le loquet a besoin d'être entraîné à l'encontre du moyen élastique jusqu'à libérer le doigt, la ridelle s'ouvrant ensuite sous l'effet de son poids ; et pour fermer la ridelle, il suffit de l'entraîner à se relever, compte tenu du fait que le loquet va spontanément se mettre en position de verrouillage sous l'effet du moyen élastique, et compte tenu de la façon dont le loquet et le doigt sont adaptés à coopérer en fin de fermeture de la ridelle.

Dans ce système de commande, la partie hydraulique est extrêmement simple, avec d'une part les vérins de ridelle et de verrouillage qui ne sont commandés que dans un seul sens (vérins simple effet), et, d'autre part, la valve de commande de fluide qui est similaire aux valves utilisées pour commander un vérin double effet.

En outre, lorsque la ridelle est en position complètement ouverte où elle est par exemple en appui sur les roues arrière du véhicule, il n'y a aucun risque de détérioration au cas où l'utilisateur amènerait la valve de commande en position d'ouverture, contrairement à ce qui se serait passé si le vérin de ridelle était un vérin hydraulique double effet qui solliciterait la ridelle dans le sens de l'ouverture lorsque la valve de commande serait mise dans une telle position.

L'invention vise à fournir un système de commande de ce type, qui soit simple, fiable, commode et économique.

Par rapport au système antérieur dont on vient de parler, le système selon l'invention se caractérise en ce que ledit loquet est adapté, par introduction de fluide sous pression dans la chambre de commande du vérin de verrouillage, à être entraîné au delà de ladite position où il ne retient plus le doigt, et à rentrer alors en contact avec la ridelle pour l'entraîner à s'ouvrir sur un angle prédéterminé à partir de la position fermée.

On entraîne ainsi la ridelle dans le sens de l'ouverture à partir de la position fermée sur un certain angle, prévu pour que les forces de gravité soient alors suffisantes pour continuer à entraîner la ridelle à s'ouvrir, ce qui permet d'éviter que la ridelle ne reste en position fermée, du fait que dans celle-ci on a une valeur extrêmement faible, voire nulle, pour le couple qui tend à l'ouvrir par suite de la gravité (en position fermée, la ridelle est disposée verticalement ou à peu près au dessus de son axe d'articulation), et compte tenu du fait qu'il peut exister au départ un couple résistant à l'ouverture ayant une valeur relativement élevée, notamment s'il y a du frottement dans les articulations ou si le produit contenu dans la benne est collant.

Selon d'autres caractéristiques préférées, ladite valve de commande de fluide admet, entre lesdites positions d'ouverture et de fermeture de la ridelle, une position neutre où la chambre de commande du vérin de ridelle et la chambre de commande du vérin de verrouillage sont chacune isolées.

Ainsi, si l'on ramène la valve de commande en position neutre alors que la ridelle est en train de s'ouvrir, alors la chambre de commande du vérin de ridelle sera isolée, le fluide qu'elle contient ne pourra plus être expulsé vers le réservoir, et par conséquent la ridelle va s'immobiliser dans la position qu'elle avait atteinte. L'utilisateur peut ainsi choisir la position à laquelle il va cesser l'ouverture de la ridelle, et notamment lorsqu'elle sera à peu près à l'horizontale, s'il désire vider la benne en la faisant basculer latéralement tout en se servant de la ridelle pour guider le produit déchargé afin qu'il se déverse à une certaine distance du véhicule.

De même lorsqu'on ramène la valve en position neutre après l'avoir amenée en position de fermeture, le fait d'isoler la chambre de commande du vérin de verrouillage se rajoute à l'effet du moyen élastique pour forcer le loquet à rester en position de verrouillage, puisque le volume de cette chambre ne peut plus varier. On obtient ainsi un maintien de la ridelle en position fermée qui est totalement sûr.

Selon d'autres caractéristiques préférées, en position d'ouverture de la ridelle, une restriction est prévue sur le trajet entre le réservoir et la chambre de commande du vérin de ridelle.

Une telle restriction est utile dans le cas où la ridelle est particulièrement lourde, car elle procure un freinage hydraulique de son mouvement d'ouverture.

Selon d'autres caractéristiques préférées, pour des raisons de simplicité et de commodité à la mise en oeuvre, notamment en ce qui concerne l'encombrement, le moyen élastique qui sollicite le loquet est disposé dans le vérin de verrouillage.

L'exposé de l'invention sera maintenant poursuivi par la description d'un mode de réalisation, donnée ci-après à titre illustratif et non limitatif en référence aux dessins annexés, sur lesquels :
- la figure 1 est une vue en élévation, prise depuis le côté gauche, d'une benne de véhicule comportant un système de commande conforme à l'invention, la ridelle étant en position fermée ;
- la figure 2 est une demi-vue en élévation-coupe prise transversalement dans la benne de la figure 1, en regardant depuis le côté situé à droite sur cette figure (côté arrière de la benne), montrant l'ensemble de contrôle du mouvement de la ridelle ;
- les figures 3 et 4 sont similaires à la figure 2, mais montrent la ridelle respectivement dans une position intermédiaire où elle est horizontale, et en position totalement ouverte ;
- la figure 5 est un agrandissement de l'extrémité gauche de la figure 1 ;
- la figure 6 est une demi-vue en élévation-coupe prise transversalement en regardant depuis le côté situé à gauche sur la figure 5 (côté avant de la benne), montrant l'ensemble de verrouillage de la ridelle qui est prévu sur le poteau avant de la benne;
- la figure 7 est un agrandissement de la partie supérieure de la figure 6 ;
- les figures 8 et 9 sont similaires mais respectivement dans la position où le loquet ne retient plus le doigt de la ridelle et dans la position de fin de course du loquet où il parvient après avoir entraîné la ridelle à s'ouvrir sur un angle prédéterminé ;
- la figure 10 est un agrandissement de l'extrémité droite de la figure 1 ;
- la figure 11 est une demi-vue en élévation-coupe prise depuis le côté droit sur la figure 10 (côté arrière de la benne), montrant l'ensemble de verrouillage de la ridelle qui est prévu sur le poteau arrière de la benne ;
- la figure 12 est un agrandissement de la partie supérieure de la figure 11 ;
- les figures 13 et 14 sont des vues similaires, mais respectivement dans des positions de même nature que celles montrées sur les figures 8 et 9 ; et
- la figure 15 montre de façon très schématique le circuit hydraulique du système de commande.

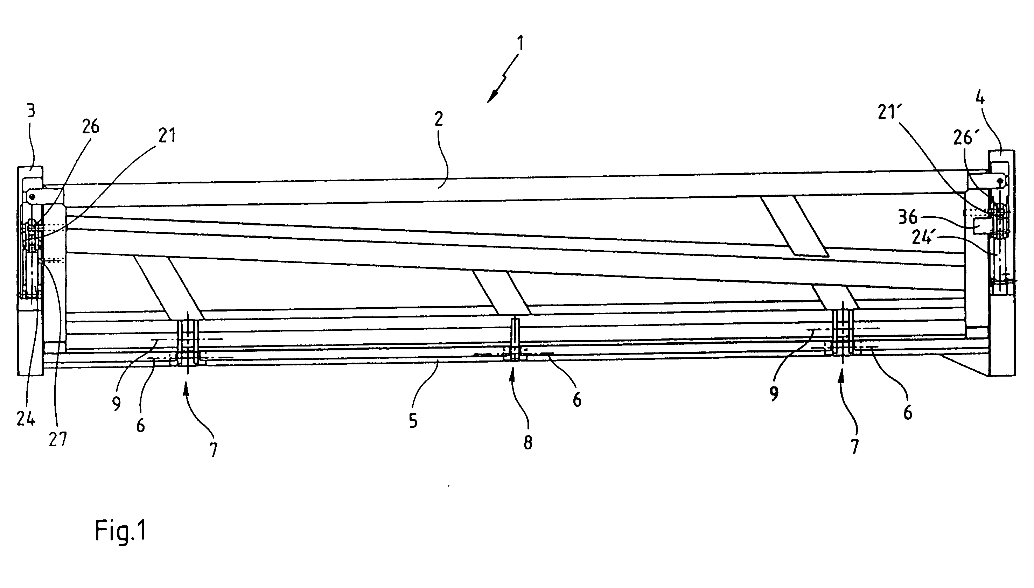

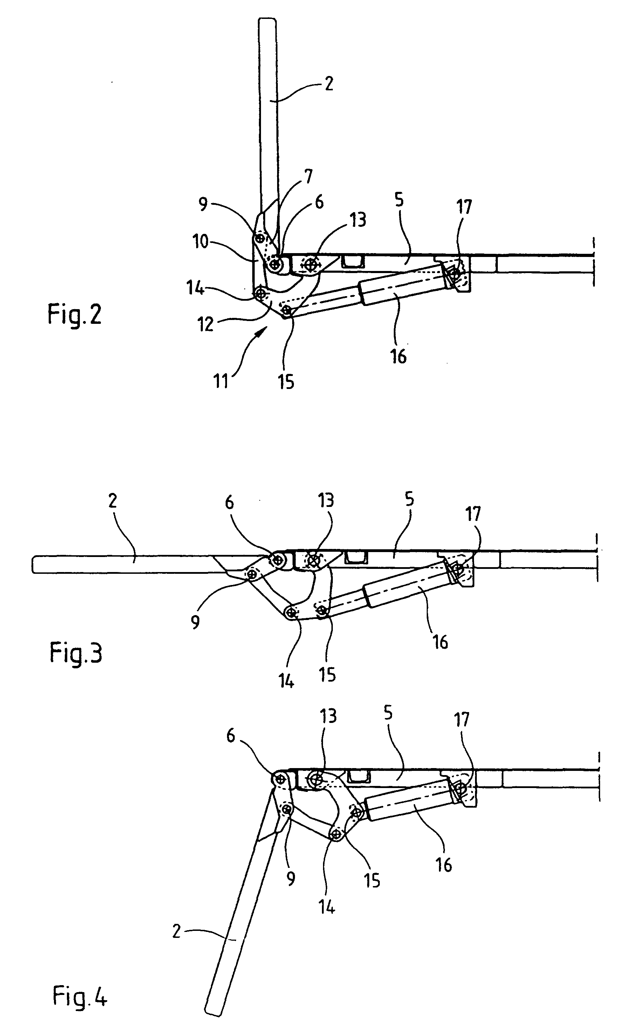

La benne 1 montrée sur la figure 1 comporte sur le côté gauche une ridelle 2 s'étendant sur toute sa longueur, entre un poteau avant 3 et un poteau arrière 4. La ridelle 2 est articulée par le bas sur le fond 5 de la benne 1, autour d'un axe d'articulation 6, grâce à des charnières avant et arrière 7 et à une charnière centrale 8. Les charnières 7 permettent non seulement à la ridelle 2 de s'articuler sur le reste de la benne, mais aussi à procurer un axe d'articulation 9 entre la ridelle 2 et une bielle 10 faisant partie d'un ensemble 11 de contrôle du mouvement de la ridelle (voir figures 2 à 4, l'ensemble 11 n'étant pas représenté sur la figure 1).

L'ensemble 11 comporte, en outre de la bielle 10, un levier 12 articulé sur le fond 5 autour d'un axe 13, articulé autour d'un axe 14 sur l'extrémité de la bielle 10 qui est opposée à celle qui s'articule autour de l'axe 9, et autour de l'axe 15 sur la tige d'un vérin 16 dont le corps, à l'extrémité opposée, est articulé sur le fond 5 autour de l'axe 17, le vérin 16 étant disposé dans un espace libre entre le fond 5 et le châssis du véhicule sur lequel est montée la benne 1.

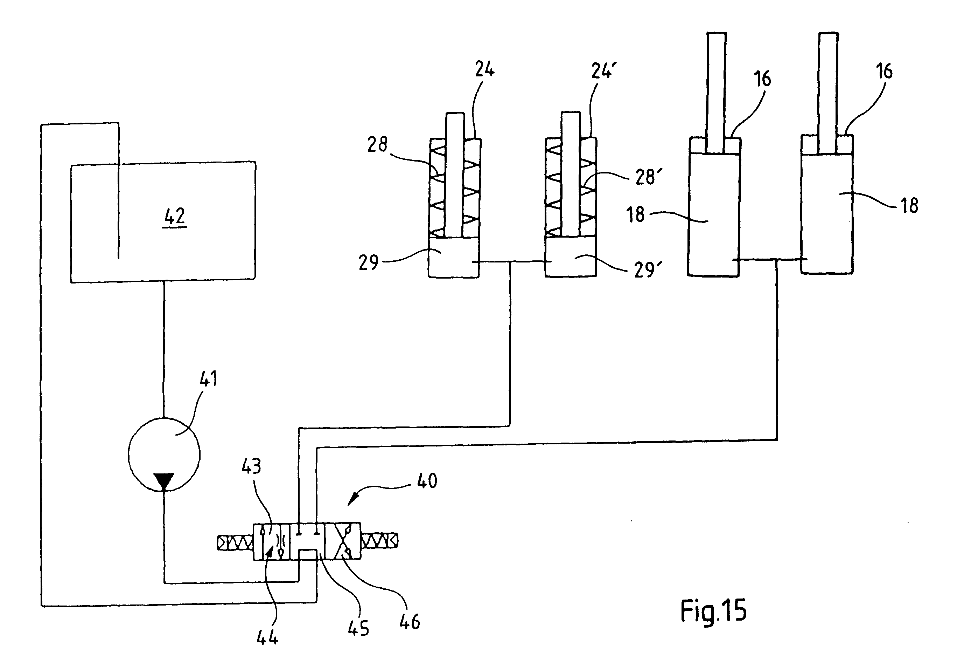

Les axes 9, 13, 14, 15 et 17 sont tous parallèles à l'axe 6, et ils sont positionnés de sorte que la tige du vérin 16 rentre progressivement dans son corps au fur et à mesure que la ridelle 2 passe de la position fermée montrée sur la figure 2 à la position pleinement ouverte montrée sur la figure 4, la chambre à grande section 18 du vérin 16 (voir figure 15) diminuant donc de volume quand la ridelle s'abaisse pour s'ouvrir. Au contraire, lorsqu'on introduit du fluide sous pression dans la chambre 18, alors la tige du vérin 16 sort et la ridelle 2 est entraînée à se relever, jusqu'à la position fermée montrée sur la figure 2 si on le désire.

On notera que le vérin 16 a une inclinaison par rapport au fond 5 qui varie peu entre les positions des figures 2 et 4, cette inclinaison étant d'environ 12° dans la position fermée (figure 2), elle passe par un maximum de 17° lorsque la ridelle est à peu près horizontale (figure 3), et elle décroît jusqu'à atteindre environ 13° dans la position totalement ouverte de la ridelle (figure 4).

Dans ces conditions, le vérin 16, pour fermer la ridelle 2, doit exercer un effort relativement faible dans la position de la figure 4, cet effort décroissant jusqu'à un minimum situé entre les figures 4 et 3, puis croissant jusqu'à la position de la figure 2.

C'est donc entre la position de la figure 4 et celles situées juste après la figure 3, que l'on dispose du maximum de réserve de puissance, ce qui est intéressant car l'on peut ainsi fermer la ridelle en charge, c'est-à-dire même si du produit précédemment déversé se trouve sur son trajet de fermeture (la réserve de puissance va permettre d'entraîner le produit se trouvant dans le trajet de la ridelle).

On notera plus précisément, en ce qui concerne le positionnement des axes précités, que l'axe 13 est situé au niveau de l'axe 6 et derrière (c'est-à-dire davantage vers l'intérieur de la benne que) celui-ci tandis que l'axe 17 est derrière et légèrement en dessous de l'axe 13. En position fermée de la ridelle, l'axe 9 est situé au dessus et légèrement en avant de l'axe 6, l'axe 14 est en dessous et à peu près à l'aplomb de l'axe 9, l'axe 15 est en dessous et en arrière de l'axe 14 tandis qu'il est en dessous et en avant de l'axe 17. En position pleinement ouverte (figure 4), l'axe 9 est en dessous et légèrement en arrière de l'axe 6, l'axe 14 est en dessous et en arrière de l'axe 9, et l'axe 15 est au dessus et en arrière de l'axe 14 tandis qu'il est en dessous et en avant de l'axe 17.

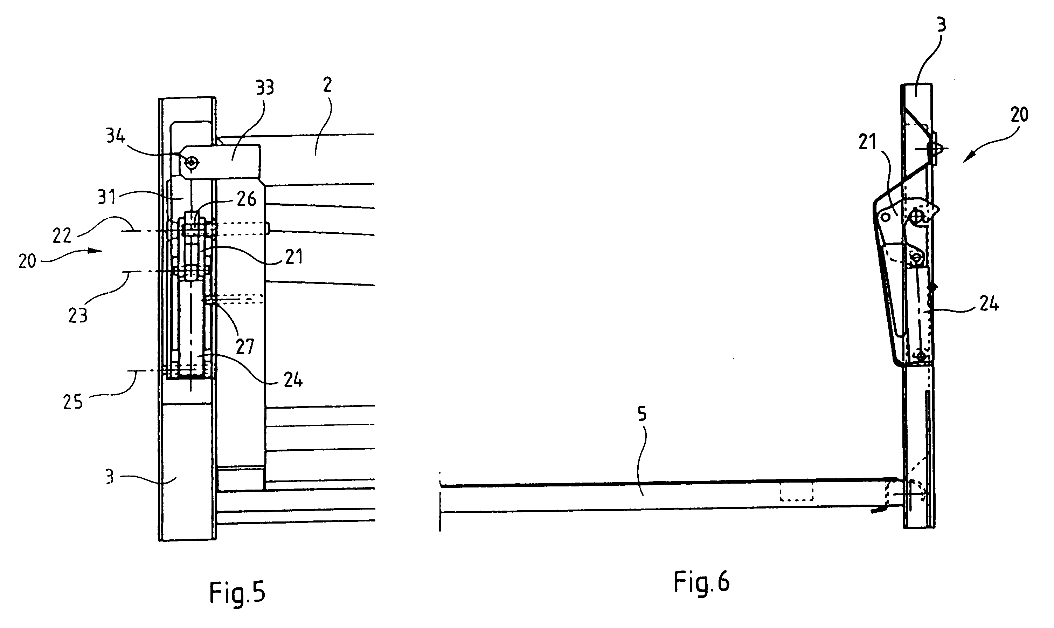

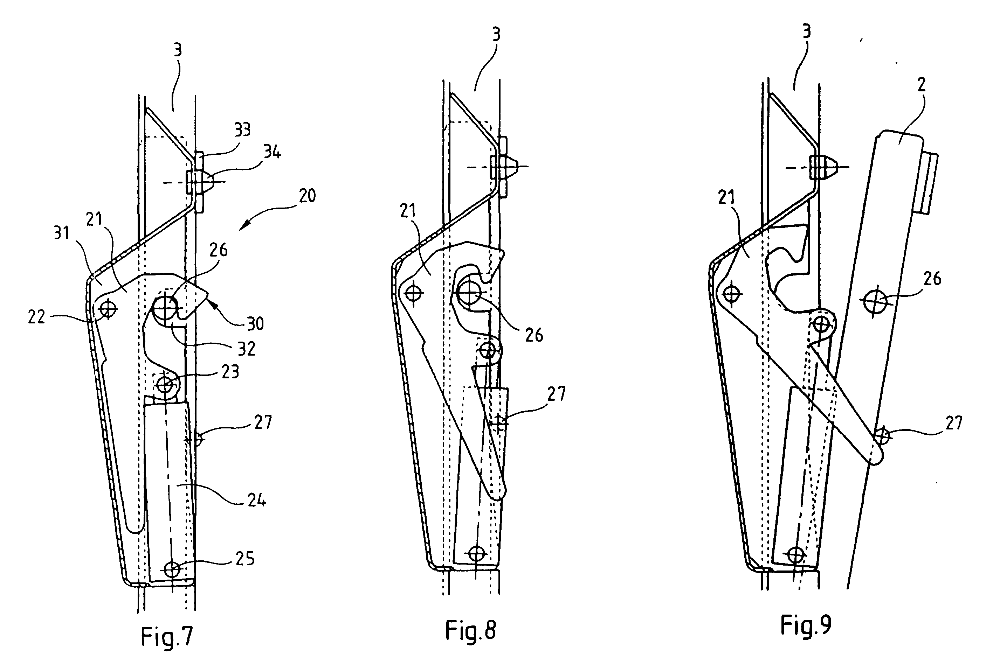

Ainsi qu'on le voit sur les figures 5 à 9, le poteau avant 3 est muni d'un ensemble 20 de verrouillage de la ridelle 2, cet ensemble comportant un loquet 21 qui présente, en vue de côté, une forme de Γ articulé sur le poteau 3 autour de l'axe 22 au sommet de sa branche verticale, tandis que sous la branche horizontale il est articulé autour de l'axe 23 à la tige d'un vérin 24 dont le corps, à l'autre extrémité du vérin, est articulé au poteau 3 autour de l'axe 25. Le loquet 21 est articulé au vérin 24 grâce à une attache qui se raccorde à la branche verticale. La branche horizontale du loquet 21 lui sert à coopérer avec un doigt 26 solidaire de la ridelle 2 tandis que la partie de sa branche verticale située sous l'attache par laquelle il s'articule au vérin 24, lui sert à coopérer (voir figures 8 et 9) avec un téton 27 également solidaire de la ridelle 2.

Comme on le voit sur la figure 15, un moyen élastique 28, ici un ressort, est disposé dans le vérin 24 pour solliciter la tige de celui-ci dans le sens où elle rentre, et donc pour solliciter le loquet 21 vers la position de verrouillage montrée sur les figures 1 et 5 à 7. Dans cette position, lorsque la ridelle est en position fermée, le loquet 21 retient le doigt 26, de sorte que la ridelle 2 est retenue en position fermée.

La chambre à grande section 29 du vérin 24 diminue de volume lorsque sa tige rentre dans son corps, c'est-à-dire lorsque le loquet 21 va vers la position de verrouillage, mais si l'on introduit du fluide sous pression dans la chambre 29, alors la tige sort et le loquet est entraîné à s'éloigner de la position de verrouillage, comme montré sur les figures 8 et 9.

Dans la position de la figure 8, le loquet 21 ne retient plus le doigt 26 et la ridelle 2 est donc libre de s'ouvrir. Le vérin 24 continue toutefois à entraîner le loquet 21 au delà de cette position afin d'entraîner la ridelle 2 à s'ouvrir sur un angle prédéterminé (ici d'à peu près 10°) jusqu'à la position montrée sur la figure 9 où le loquet 21 est en butée sur le poteau 3. La ridelle 2 est entraînée par le loquet 21 parce que la portion de la branche verticale de celui-ci située sous l'attache avec le vérin rentre en contact avec le téton 27 et le pousse vers l'extérieur en même temps que la ridelle 2.

A l'inverse, en fin de fermeture de la ridelle, il est prévu que la chambre 29 soit libre de changer de volume de sorte que le moyen élastique 28 peut amener le loquet 21 en position de verrouillage, et que, quand le doigt 26 vient rencontrer la rampe 30 du loquet 21, celui-ci est entraîné à l'encontre du ressort 28, jusqu'à une position limite où le loquet peut revenir vers la position de verrouillage avec le doigt 26 qui s'accroche alors grâce à la gorge prévue derrière la rampe 30. Pendant ce mouvement d'accrochage automatique, la tige du vérin 24 a pu sortir et rentrer puisque la chambre 29 est libre de varier de volume.

On notera que l'ensemble 20 est disposé dans un logement 31 qui est plus profond que l'épaisseur générale du poteau 3, l'axe 22 étant en particulier situé en un lieu de ce logement qui est en saillie du côté interne de la benne. En revanche, il n'y a pratiquement aucune partie de l'ensemble 20 qui soit en saillie à l'extérieur de la ridelle lorsque celle-ci est en position fermée (voir notamment la figure 7). On notera à cet égard que le doigt 26 se trouve alors à peu près au milieu du poteau 3, si l'on considère son épaisseur générale, et que cela est rendu possible grâce à une encoche 32. En outre, une patte 33 et un pion 34 solidaires respectivement de la ridelle 2 et du poteau 3 sont prévus pour procurer un positionnement relatif précis de la ridelle en position fermée.

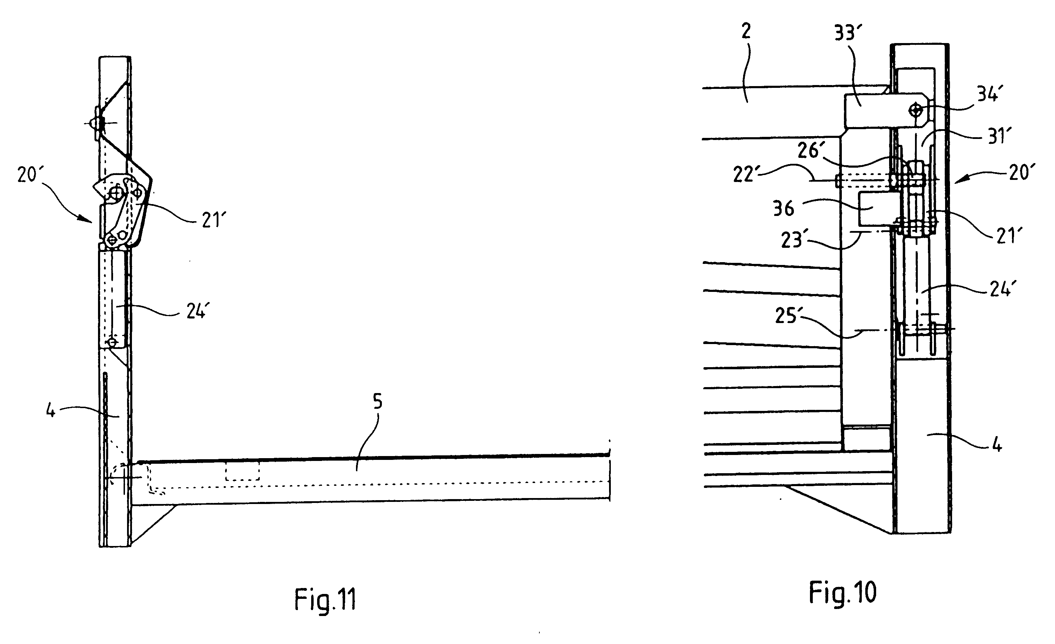

Ainsi qu'on le voit sur les figures 10 à 14, l'ensemble de verrouillage monté sur le poteau arrière 4 est similaire à l'ensemble 20, si ce n'est que le loquet, ainsi que son logement, ont une forme différente. Dans ces conditions, on gardera les mêmes références numériques pour les éléments similaires, mais affectées d'un indice "prime".

Le loquet 21' de l'ensemble 20' a également une forme en Γ, mais sa branche verticale est plus courte, sa partie la plus basse se raccordant à l'attache qui sert à l'articulation avec le vérin 24', et l'élément qui sert à coopérer avec la ridelle 2 pour l'entraîner à s'ouvrir est une petite tige 35 disposée en saillie vers l'avant de la benne sur l'une des deux joues latérales qui servent à former la branche verticale du crochet, et à la base de cette branche verticale, juste au dessus de l'attache avec le vérin 24'. La tige 35 rentre en contact avec la ridelle 2 par une patte 36 prévue sur celle-ci, qui joue une fonction similaire au téton 27.

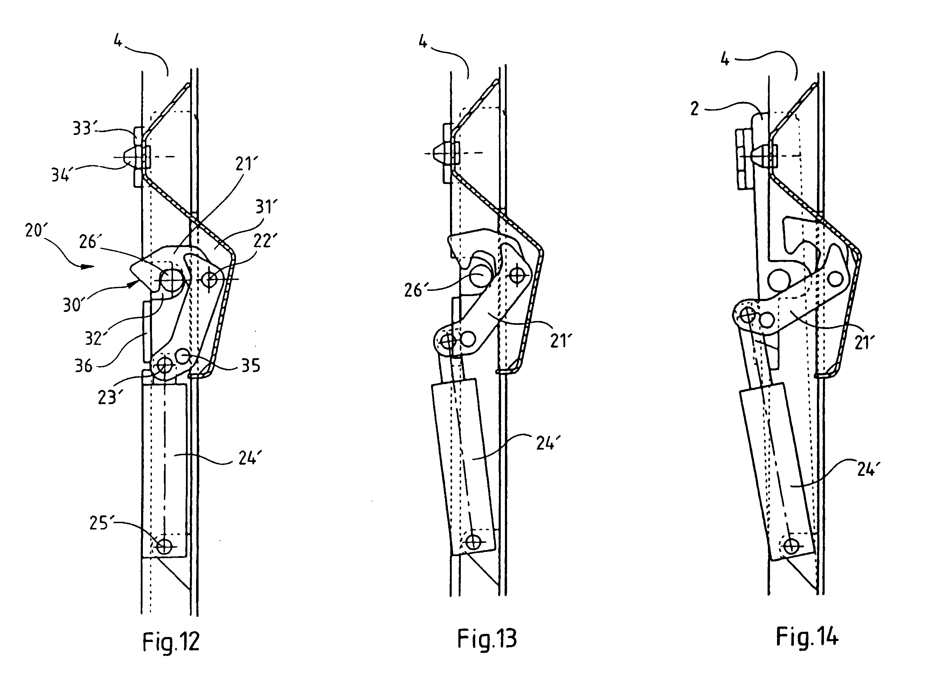

On observera (voir figure 14) que l'angle sur lequel la tige 35 entraîne la ridelle 2 est beaucoup plus petit que celui donné par le crochet 21, puisqu'il est seulement de l'ordre de 2°, mais que le logement 31' est beaucoup moins en saillie à l'intérieur de la benne 2.

C'est pour cette raison que l'on a choisi de monter l'ensemble 20' à l'arrière, afin que l'obstacle à l'écoulement des produits contenus dans la benne lorsqu'on la vide en la faisant basculer vers l'arrière soit aussi limité que possible. Les vérins 24 et 24' travaillent donc ensemble pour ouvrir la ridelle 2 sur les deux premiers degrés d'ouverture, qui suffisent en principe pour qu'ensuite la ridelle continue à s'ouvrir sous l'effet de son poids, l'entraînement continuant toutefois sur encore environ 8° grâce à l'ensemble 20, ce qui permet de surmonter des circonstances particulièrement défavorables, notamment au cas où les produits seraient collants (terre humide, ...) ou en cas de contre-pente.

Ainsi que montré sur la figure 15, le système de commande de la ridelle 2 comporte également une valve 40 de commande de fluide qui est reliée à la chambre de commande de chacun des vérins de ridelle 16, à la chambre de commande de chacun des vérins de verrouillage 24 et 24', à une pompe 41 et à un réservoir 42. La valve 40 admet une position d'ouverture de la ridelle, symbolisée par la case 43, où les chambres 29 et 29' sont reliées à la pompe 41 tandis que les chambres 18 sont reliées au réservoir 42, une restriction 44 étant prévue sur le trajet entre les chambres 18 et le réservoir 42 ; une position neutre symbolisée par la case 45, où la pompe 41 est connectée au réservoir 42 tandis que les chambres 18, 29 et 29' sont isolées ; et une position de fermeture de la ridelle, symbolisée par la case 46, où les chambres 18 sont reliées à la pompe tandis que les chambres 29 et 29' sont reliées au réservoir 42.

La position représentée pour la tige des vérins 16, 24 et 24' est celle qu'ils ont en position fermée de la ridelle. Si l'on commande la valve 40 pour l'amener en position d'ouverture (case 43) alors la pompe va introduire du fluide sous pression dans les chambres 29 et 29', la tige des vérins 24 et 24' va donc sortir jusqu'à libérer les doigts 26 et 26' puis entraîner la ridelle 2 à s'ouvrir sur quelques degrés, la ridelle continuant à s'ouvrir ensuite sous l'effet de son poids de sorte que la tige de chacun des vérins 16 va rentrer dans le corps de celui-ci, faisant ainsi diminuer de volume chacune des chambres 18, le fluide expulsé de ces chambres étant conduit au réservoir 42 par un trajet passant par la restriction 44, qui procure un freinage hydraulique.

Pour arrêter l'ouverture de la ridelle, par exemple dans la position montrée sur la figure 3, il suffit de ramener la valve 40 à la position neutre (case 45), le fait que les chambres 18 soient alors isolées leur interdisant de continuer à diminuer de volume puisqu'elles ne peuvent plus expulser du fluide.

Lorsqu'on désire fermer la ridelle, on amène la valve 40 en position de fermeture (case 46), la pompe 41 communique alors avec les chambres 18 et y introduit du fluide sous pression qui fait sortir la tige de chacun des vérins 16, et entraîne donc la ridelle à se relever. Si l'on garde cette position suffisamment longtemps, chaque doigt 26 et 26' viendra s'accrocher automatiquement dans le crochet 21 ou 21', puisque les chambres 29 et 29' sont reliées au réservoir 42, et peuvent donc librement varier de volume. Lorsqu'on revient en position neutre (case 45), les chambres 29 et 29' sont isolées, ce qui force les loquets 21 à rester en position de verrouillage. Le système de commande dont est équipé la benne 1 procure donc un maintien en verrouillage particulièrement sûr.

On notera que la benne 1 comporte sur son côté gauche une ridelle similaire, coopérant avec un système de commande semblable.

En fonction des circonstances, de nombreuses variantes sont possibles, on peut notamment prévoir un seul ensemble de contrôle 11 pour des ridelles plus petites, ou davantage que deux ensembles dans le cas où la ridelle est beaucoup plus importante.

## Revendications

1. Système de commande d'une ridelle de benne de véhicule articulée par le bas, comportant :
- un ensemble (11) de contrôle du mouvement de la ridelle (2), comportant un vérin (16) dit de ridelle, lié à celle-ci et au reste de la benne (1), à simple effet, présentant une chambre de commande (18) qui diminue de volume quand la ridelle s'abaisse (s'ouvre) tandis qu'il est adapté par introduction de fluide sous pression dans ladite chambre de commande, à entraîner la ridelle à se relever jusqu'à être en position fermée ;
- un ensemble de verrouillage (20 ; 20') de la ridelle, comportant un loquet (21 ; 21') sollicité par un moyen élastique (28 ; 28') vers une position de verrouillage où il peut retenir un doigt (26 ; 26') solidaire de la ridelle (2) lorsque celle-ci est en position fermée, ledit loquet et ledit doigt étant prévus pour coopérer de sorte qu'en fin de fermeture de la ridelle, si le loquet est en position de verrouillage, le doigt vient rencontrer le loquet et l'entraîne à l'encontre du moyen élastique jusqu'à une position limite où le loquet peut revenir vers la position de verrouillage en accrochant alors le doigt ; et comportant un vérin (24 ; 24') dit de verrouillage, lié au loquet et au reste de la benne, et présentant une chambre de commande (29 ; 29') qui diminue de volume quand le loquet va vers la position de verrouillage, étant prévu, par introduction de fluide sous pression dans ladite chambre de commande, pour entraîner le loquet à s'éloigner de la position de verrouillage jusqu'à une position où il ne retient plus ledit doigt, afin de permettre à la ridelle de s'ouvrir ; et
- une valve (40) de commande de fluide, reliée à la chambre de commande (18) du vérin de ridelle (16), à la chambre de commande (29 ; 29') du vérin de verrouillage (24 ; 24'), à une pompe (41) et à un réservoir (42), admettant une position d'ouverture de la ridelle où la chambre (29 ; 29') de commande du vérin de verrouillage (24 ; 24') est reliée à la pompe (41) tandis que la chambre de commande (18) du vérin de ridelle (16) est reliée au réservoir (42), et admettant une position de fermeture de la ridelle où la chambre (18) de commande du vérin de ridelle (16) est reliée à la pompe tandis que la chambre de commande (29 ; 29') du vérin de verrouillage (24 ; 24') est reliée au réservoir (42) ;
**caractérisé en ce que** ledit loquet (21 ; 21') est adapté, par introduction de fluide sous pression dans la chambre de commande (29 ; 29') du vérin de verrouillage (24 ; 24'), à être entraîné au delà de ladite position où il ne retient plus le doigt (26 ; 26'), et à rentrer alors en contact avec la ridelle (2) pour l'entraîner à s'ouvrir sur un angle prédéterminé à partir de la position fermée.

2. Système selon la revendications 1, **caractérisé en ce que** ladite valve de commande de fluide (40) admet, entre lesdites positions d'ouverture et de fermeture de la ridelle, une position neutre où la chambre de commande (18) du vérin de ridelle (16) et la chambre de commande (29 ; 29') du vérin de verrouillage (24 ; 24') sont chacune isolées.

3. Système selon l'une quelconque des revendications 1 ou 2, **caractérisé en ce qu'**en position d'ouverture de la ridelle, une restriction (44) est prévue sur le trajet entre le réservoir (42) et la chambre de commande (18) du vérin de ridelle (16).

4. Système selon l'une quelconque des revendications 1 à 3, **caractérisé en ce que** le moyen élastique (28 ; 28') qui sollicite le loquet (21 ; 21') est disposé dans le vérin de verrouillage (24 ; 24').

5. Système selon l'une quelconque des revendications 1 à 4, **caractérisé en ce que** ledit loquet (21) présente, en vue de côté, une forme de Γ articulée sur ledit reste de la benne au sommet de sa branche verticale tandis qu'il est articulé sur ledit vérin de verrouillage (24) sous la branche horizontale grâce à une attache se raccordant à la branche verticale, ce loquet (21) coopérant avec ledit doigt (26) par sa branche horizontale tandis qu'il coopère avec la ridelle, pour l'entraîner à s'ouvrir, par une partie de sa branche verticale située en dessous de ladite attache.

6. Système selon l'une quelconque des revendications 1 à 4, **caractérisé en ce que** ledit loquet (21') présente, en vue de côté, une forme de Γ articulée sur ledit reste de la benne au sommet de sa branche verticale, tandis qu'il est articulé sur ledit vérin de vérouillage sous la branche horizontale grâce à une attache se raccordant à la base de la branche verticale, ce loquet coopérant avec ledit doigt (26') par la branche horizontale tandis qu'il coopère avec la ridelle 2, pour l'entraîner à s'ouvrir, par une partie de sa branche verticale située au dessus de ladite attache.

7. Système selon l'une quelconque des revendications 5 ou 6, **caractérisé en ce que** ladite ridelle (2) articulée par le bas est bordée de chaque côté par un poteau (3, 4) comportant un logement (31 ; 31') pour un dit loquet (21 ; 21') et son dit vérin de verrouillage (24 ; 24'), ledit logement (31 ; 31') étant plus profond que l'épaisseur générale du poteau (3, 4), avec le loquet (21 ; 21') articulé au poteau en un lieu du logement qui est en saillie du côté interne de la benne (1).

8. Système selon la revendication 7, **caractérisé en ce que** ladite ridelle (2) s'étend sur toute la longueur de la benne (1), le poteau avant (3) étant équipé d'un loquet (21) tel que caractérisé dans la revendication 5, et le poteau arrière (4) équipé d'un loquet (21') tel que caractérisé dans la revendication 6.

9. Système selon l'une quelconque des revendications 1 à 8, **caractérisé en ce que** ledit ensemble de contrôle du mouvement de la ridelle (11) comporte :
- un levier (12) articulé sur la benne autour d'un premier axe d'articulation (13) ;
- une bielle (10) articulée à une première extrémité à la ridelle autour d'un deuxième axe d'articulation (9), et à une deuxième extrémité audit levier (12) autour d'un troisième axe d'articulation (14) ;
- ledit vérin de ridelle (16), qui est disposé dans un espace libre sous le fond (5) de la benne (1), et articulé à une première extrémité au levier (12) autour d'un quatrième axe d'articulation (15) et à une deuxième extrémité sur la benne autour d'un cinquième axe d'articulation (17) ;
lesdits premier à cinquième axes d'articulation étant parallèles à l'axe (6) d'articulation de la ridelle sur la benne.

## Patentansprüche

1. Steuersystem für eine unten angelenkte Bordwand eines Wagenkastens mit
- einer steuerbaren Antriebseinrichtung (11) für die Bordwand (2) mit einem als Bordwandzylinder bezeichneten Kraftzylinder (16), der einerseits mit der Bordwand und andererseits mit dem übrigen Teil des Wagenkastens (1) verbunden ist und ein einfach wirkender Zylinder mit einer Steuerkammer (18) ist, deren Volumen kleiner wird, wenn sich die Bordwand absenkt (öffnet), dagegen durch Beaufschlagung der Steuerkammer mit Druckfluid die Bordwand durch den Zylinder wieder aufrichtbar ist, bis sie die geschlossene Stellung einnimmt;
- einer Verriegelungseinrichtung (20; 20') für die Bordwand mit einem Riegel (21; 21'), der durch ein elastisches Mittel (28; 28') zu einer Verriegelungsstellung hin vorbelastet ist, in der er einen fest an der Bordwand (2) angebrachten Finger (26; 26') halten kann, wenn sich diese in der geschlossenen Stellung befindet, wobei der Riegel und der Finger derart zusammenwirken, daß am Ende der Schließbewegung der Bordwand, wenn der Riegel die Verriegelungsstellung einnimmt, der Finger gegen den Riegel stößt und ihn gegen die Wirkung des elastischen Mittels bis in eine Grenzstellung drängt, von wo der Riegel zur Verriegelungsstellung zurückkehren kann, indem er mit dem Finger verhakt, und einem als Verriegelungszylinder bezeichneten Kraftzylinder (24; 24'), der einerseits mit dem Riegel und andererseits mit dem übrigen Teil des Wagenkastens verbunden ist und eine Steuerkammer (29; 29') aufweist, deren Volumen kleiner wird, wenn sich der Riegel zur Verriegelungsstellung hin bewegt, und die mit Druckfluid beaufschlagbar ist, um den Riegel aus der Verriegelungsstellung in eine den Finger nicht mehr haltende Stellung zu bewegen, damit sich die Bordwand öffnen kann und
- einem Steuerventil (40) für Fluid, das an die Steuerkammer (18) des Bordwandzylinders (16), die Steuerkammer (29; 29') des Verriegelungszylinders (24; 24'), eine Pumpe (41) und ein Reservoir (42) angeschlossen ist und eine Stellung für das Öffnen der Bordwand zuläßt, in der die Steuerkammer (29; 29') des Verriegelungszylinders (24; 24') mit der Pumpe, dagegen die Steuerkammer (18) des Bordwandzylinders (16) mit dem Reservoir (42) verbunden ist, sowie eine Stellung für das Schließen der Bordwand erlaubt, in der die Steuerkammer (18) des Bordwandzylinders (16) mit der Pumpe, dagegen die Steuerkammer (29; 29') des Verriegelungszylinders (24; 24') mit dem Reservoir (42) verbunden ist,
**dadurch gekennzeichnet, daß** der Riegel (21; 21') durch Beaufschlagung der Steuerkammer (29; 29') des Verriegelungszylinders (24; 24') mit Druckfluid über die Stellung, in der er den Finger (26; 26') nicht mehr hält, hinaus bewegbar und in Anlage an die Bordwand (2) zu bringen ist, um sie, ausgehend von der geschlossenen Stellung, um einen bestimmten Winkel zu öffnen.

2. Steuersystem nach Anspruch 1, **dadurch gekennzeichnet, daß** das Steuerventil (40) für Fluid zwischen der geöffneten Stellung und der geschlossenen Stellung der Bordwand eine Neutralstellung zuläßt, in der sowohl die Steuerkammer (18) des Bordwandzylinders (16) als auch die Steuerkammer (29; 29') des Verriegelungszylinders (24; 24') abgesperrt sind.

3. Steuersystem nach einem der Ansprüche 1 oder 2, **dadurch gekennzeichnet, daß** in der geöffneten Stellung der Bordwand eine Drosselstelle (44) im Strömungsweg zwischen dem Reservoir (42) und der Steuerkammer (18) des Bordwandzylinders (16) vorgesehen ist.

4. Steuersystem nach einem der Ansprüche 1 bis 3, **dadurch gekennzeichnet, daß** das elastische Mittel (28; 28'), welches den Riegel (21; 21') belastet, in dem Verriegelungszylinder (24; 24') montiert ist.

5. Steuersystem nach einem der Ansprüche 1 bis 4, **dadurch gekennzeichnet, daß** der Riegel (21) in Seitenansicht die Form eines Winkels Γ hat, der am oberen Ende seines senkrechten Schenkels an dem übrigen Teil des Wagenkastens schwenkbar gelagert ist, während er unterhalb des horizontalen Schenkels mittels eines sich an den senkrechten Schenkel anschließenden Anschlußauges gelenkig mit dem Verriegelungszylinder (24) verbunden ist, wobei der Riegel (21) durch seinen horizontalen Schenkel mit dem Finger (26), dagegen durch einen Teil seines senkrechten Schenkels, der sich unterhalb des Anschlußauges befindet, mit der Bordwand zusammenwirkt, um sie aufzuschieben.

6. Steuersystem nach einem der Ansprüche 1 bis 4, **dadurch gekennzeichnet, daß** der Riegel (21') in Seitenansicht die Form eines Winkels Γ hat, der am oberen Ende seines senkrechten Schenkels gelenkig mit dem übrigen Teil des Wagenkastens verbunden ist, während er unterhalb des horizontalen Schenkels mittels eines sich an das untere Ende des senkrechten Schenkels anschließenden Anschlußauges mit dem Verriegelungszylinder verbunden ist, und daß der Riegel durch den horizontalen Schenkel mit dem Finger (26') zusammenwirkt, während er durch einen oberhalb des Anschlußauges gelegenen Teil seines senkrechten Schenkels mit der Bordwand zusammenwirkt, um sie aufzudrücken.

7. Steuersystem nach Anspruch 5 oder 6, **dadurch gekennzeichnet, daß** sich zu beiden Seiten der untenangelenkten Bordwand (2) ein Pfosten (3, 4) mit einer Aufnahme (31; 31') für einen Riegel (21; 21') und seinen Verriegelungszylinder (24; 24') befindet, welche tiefer ist als die allgemeine Dicke des Pfostens (3, 4), wobei der Riegel (21; 21') an einer Stelle der Aufnahme am Pfosten angelenkt ist, die innenseitig in den Wagenkasten (1) vorspringt.

8. Steuersystem nach Anspruch 7, **dadurch gekennzeichnet, daß** sich die Bordwand (2) über die gesamte Länge des Wagenkastens (1) erstreckt, der vordere Pfosten (3) mit einem Riegel (21) gemäß Anspruch 5 ausgerüstet ist und der hintere Pfosten (4) mit einem Riegel (21') gemäß Anspruch 6 versehen ist.

9. Steuersystem nach einem der Ansprüche 1 bis 8, **dadurch gekennzeichnet, daß** zu der steuerbaren Antriebseinrichtung (11) für die Bordwand gehören:
- ein Hebel (12), der am Wagenkasten um eine erste Gelenkachse (13) schwenkbar gelagert ist;
- ein Kurbelarm (10), der an seinem einen Ende an der Bordwand um eine zweite Gelenkachse (9) schwenkbar gelagert ist und an seinem anderen Ende mit dem Hebel (12) um eine dritte Gelenkachse (14) drehbar verbunden ist;
- der Bordwandzylinder (16), der in einem freien Raum unter dem Boden (5) des Wagenkastens (1) angeordnet CR ist, an seinem einen Ende um eine vierte Gelenkchse (15) drehbar mit dem Hebel (12) verbunden ist und an seinem anderen Ende um eine fünfte Gelenkachse (17) schwenkbar am Wagenkasten gelagert ist, wobei sämtliche Gelenkachsen, von der ersten bis zur fünften, parallel zur Gelenkachse (6) der Bordwand am Wagenkasten liegen.

## Claims

1. System for controlling a vehicle trailer side panel articulated from below, including:
- an assembly (11) for controlling the movement of the side panel (2), including a so-called side-panel cylinder (16), connected to the said side panel and to the remainder of the trailer (1), single-acting, having a control chamber (18) which decreases in volume when the side panel drops (opens) whilst it is adapted, by the introduction of pressurized fluid into the said control chamber, to impel the side panel to rise until it is in the closed position;
- an assembly (20; 20') for locking the side panel, including a latch (21; 21') forced by an elastic means (28; 28') towards a locking position in which it is able to hold a finger (26; 26') fixed to the side panel (2) when the latter is in the closed position, the said latch and the said finger being designed to cooperate so that, at the end of closure of the side panel, if the latch is in the locking position, the finger comes up against the latch and drives it counter to the elastic means as far as a limit position in which the latch is able to return to the locking position, then hooking onto the finger; and having a so-called locking cylinder (24; 24'), connected to the latch and to the remainder of the trailer, and having a control chamber (29; 29') whose volume decreases when the latch goes towards the locking position, being designed, through the introduction of pressurized fluid into the said control chamber, to impel the latch to move away from the locking position to a position in which it no longer holds the said finger, in order to enable the side panel to open; and
- a fluid control valve (40), connected to the control chamber (18) of the side-panel cylinder (16), to the control chamber (29; 29') of the locking cylinder (24; 24'), to a pump (41) and to a reservoir (42), allowing a position of opening of the side panel in which the control chamber (29; 29') of the locking cylinder (24; 24') is connected to the pump (41) whilst the control chamber (18) of the side-panel cylinder (16) is connected to the reservoir (42), and allowing a position of closure of the side panel in which the control chamber (18) of the side-panel cylinder (16) is connected to the pump whilst the control chamber (29; 29') of the locking cylinder (24; 24') is connected to the reservoir (42),
**characterised in that** the said latch (21; 21') is adapted, by the introduction of pressurized fluid into the control chamber (29; 29') of the locking cylinder (24; 24'), to be driven beyond the said position in which it no longer holds the finger (26; 26'), and then to come back into contact with the side panel (2) in order to impel it to open at a predetermined angle from the closed position.

2. System according to Claim 1, **characterised in that** the said fluid control valve (40) allows, between the said positions of opening and closure of the side panel, a neutral position in which the control chamber (18) of the side-panel cylinder (16) and the control chamber (29; 29') of the locking cylinder (24; 24') are each isolated.

3. System according to either one of Claims 1 or 2, **characterised in that**, in the position of opening of the side panel, a restriction (44) is provided on the path between the reservoir (42) and the control chamber (18) of the side-panel cylinder (16).

4. System according to any one of Claims 1 to 3, **characterised in that** the elastic means (28; 28') which acts on the latch (21; 21') is disposed in the locking cylinder (24; 24').

5. System according to any one of Claims 1 to 4, **characterised in that** the said latch (21) has, seen from the side, the shape of a Γ articulated on the said remainder of the trailer at the top of its vertical leg whilst it is articulated on the said locking cylinder (24) below the horizontal leg by virtue of a fastener connected to the vertical leg, this latch (21) cooperating with the said finger (26) through its horizontal leg whilst it cooperates with the side panel, in order to impel it to open, through a part of its vertical leg situated below the said fastener.

6. System according to any one of Claims 1 to 4, **characterised in that** the said latch (21') has, seen from the side, the shape of a Γ articulated on the said remainder of the trailer at the top of its vertical leg whilst it is articulated on the said locking cylinder below the horizontal leg by virtue of a fastener connected to the base of the vertical leg, this latch cooperating with the said finger (26') through the horizontal leg whilst it cooperates with the side panel (2), in order to impel it to open, through a part of its vertical leg situated above the said fastener.

7. System according to either one of Claims 5 or 6, **characterised in that** the said side panel (2) articulated from below is bordered on each side by a post (3, 4) having a housing (31; 31') for a said latch (21; 21') and its said locking cylinder (24; 24'), the said housing (31; 31') being deeper than the overall thickness of the post (3, 4), with the latch (21; 21') articulated on the post at a part of the housing which projects on the internal side of the trailer (1).

8. System according to Claim 7, **characterised in that** the said side panel (2) extends over the entire length of the trailer (1), the front post (3) being equipped with a latch (21) as **characterised in** Claim 5, and the rear post (4) equipped with a latch (21') as **characterised in** Claim 6.

9. System according to any one of Claims 1 to 8, **characterised in that** the said assembly controlling the movement of the side panel (11) includes:
- a lever (12) articulated on the trailer about a first articulation axis (13);
- a link (10) articulated at a first end on the side panel about a second articulation axis (9), and at a second end on the said lever (12) about a third articulation axis (14);
- the said side-panel cylinder (16), which is disposed in a free space below the base (5) of the trailer (1), and articulated at a first end on the lever (12) about a fourth articulation axis (15) and at a second end on the trailer about a fifth articulation axis (17);
the said first to fifth articulation axes being parallel to the axis (6) of articulation of the side panel on the trailer.
